# DEMANDE DE BREVET EUROPEEN

(11) **EP 0 903 925 A2**
(43) Date de publication de la demande: **24.03.1999**
(21) Numéro de dépôt: 98402295.4
(22) Date de dépôt: 17.09.1998
(51) Int. Cl.: H04M 11/06

(54) **Modem piloté à distance**

(30) Priorité: 22.09.1997 FR 9711746
(71) Demandeur: Olitec, 54220 Malzeville (FR)
(72) Inventeur: Pelletier, Didier, 54130 Saint Max (FR); Balaud, Bruno, 54510 Tomblaine (FR)
(74) Mandataire: Joly, Jean-Jacques

(57) **Abrégé**

Le modem est destiné à être relié à un réseau de télécommunication (20) et à être associé à un terminal (30). Le modem comprend une unité de modulation/démodulation classique (100-106) pour permettre au terminal (30) de communiquer sur le réseau de télécommunication (20), et est capable d'assurer au moins une fonction supplémentaire telle qu'une fonction de téléphone mains libres, répondeur-enregistreur ou télécopieur. Le modem est caractérisé en ce qu'il comprend un récepteur infrarouge (114) pour recevoir par une liaison sans fil et indépendamment de l'état du terminal (30) des signaux de commande (SC) destinés à commander la fonction supplémentaire, et une unité de commande (107) pour commander la fonction supplémentaire en fonction des signaux de commande reçus par le récepteur infrarouge. Le modem peut ainsi être piloté directement par un utilisateur même lorsque le terminal associé (30) est éteint.

## Description

La présente invention concerne un modem pour connecter un terminal informatique à un réseau de télécommunication, tel que le réseau téléphonique public commuté. Plus particulièrement, l'invention concerne un modem capable de mettre en oeuvre certaines options. Ces options sont notamment des fonctions de téléphone mains libres, répondeur-enregistreur et/ou télécopieur.

Des modems mettant en oeuvre des fonctions autres que la fonction de modulation/démodulation de base sont connus dans la technique. Par exemple, le modem « Self-memory 33600 » (marque déposée) commercialisé par la présente demanderesse, est capable de transmettre et recevoir des télécopies ou des messages vocaux. Ce modem comporte en outre une mémoire qui stocke les données reçues même lorsque le terminal associé au modem est éteint. Les données mémorisées dans le modem sont alors restituées au terminal, soit automatiquement dès la mise en marche de ce dernier, soit sur requête du terminal.

Dans les modems du type décrit ci-dessus, la plupart des opérations relatives aux options précitées ne peuvent être commandées qu'à partir du terminal associé au modem. Ainsi, afin par exemple d'établir une communication téléphonique à travers le réseau téléphonique commuté selon le mode de fonctionnement dit « téléphone mains libres » du modem, l'utilisateur du modem doit allumer le terminal, composer le numéro téléphonique du destinataire sur le clavier du terminal, puis, une fois la communication terminée, libérer la ligne téléphonique encore via le terminal. De même, pour enregistrer un message d'accueil à émettre par le modem en cas d'absence de l'utilisateur (fonction répondeur) ou pour effacer des messages vocaux stockés dans le modem, l'utilisateur doit transmettre ses commandes d'enregistrement et d'effacement par l'intermédiaire du terminal associé au modem.

Il ne serait toutefois pas approprié de réaliser un modem comportant un clavier pour permettre à un utilisateur de commander directement les fonctions supplémentaires du modem. En effet, le modem est, par sa fonction de base même, un produit qui n'est généralement pas mis en valeur dans une habitation, où il reste le plus souvent caché derrière le terminal associé et est par conséquent difficilement accessible. D'autre part, l'intégration d'un clavier dans un modem augmenterait la taille du modem, qui deviendrait alors moins attrayant pour le public par rapport aux modems actuels de petite taille.

La présente invention vise à remédier aux inconvénients ci-dessus, et à fournir un modem dont les fonctions supplémentaires telles que téléphone mains libres, répondeur-enregistreur et télécopieur peuvent être commandées directement par un utilisateur quel que soit l'état du terminal associé.

A cette fin, un modem destiné à être relié à un réseau de télécommunication et à être associé à un terminal, comprenant un moyen de modulation/démodulation pour permettre au terminal de communiquer sur le réseau de télécommunication, et un moyen pour assurer au moins une fonction supplémentaire telle qu'une fonction de téléphone mains libres, répondeur-enregistreur ou télécopieur, est caractérisé en ce qu'il comprend :
- un moyen de réception pour recevoir par une liaison sans fil et indépendamment de l'état du terminal des signaux de commande destinés à commander ladite au moins une fonction supplémentaire, et
- un moyen de commande pour commander ladite au moins une fonction supplémentaire en fonction des signaux de commande reçus.

L'expression « état du terminal » signifie soit que le terminal est non connecté physiquement au modem, soit qu'il est connecté physiquement au modem et éteint, soit qu'il est connecté physiquement au modem et allumé.

Le moyen de commande comprend de préférence un microprocesseur relié au moyen de réception. Le moyen assurant au moins une fonction supplémentaire comprend notamment une interface de ligne, un processeur de signal, et au moins un microprocesseur associé à des mémoires. Les signaux de commande sont typiquement générés par une télécommande, du type de celles utilisées pour les télévisions ou chaînes audio par exemple.

Grâce aux moyens de réception et de commande de l'invention, ladite au moins une fonction supplémentaire du modem est une fonction autonome qui peut être activée et commandée indépendamment du terminal associé. Ainsi, le modem selon l'invention peut être acheté avant le terminal pour servir dans un premier temps seulement de téléphone mains libres et/ou de répondeur-enregistreur.

Selon un aspect de l'invention, le moyen de commande comprend un moyen pour sélectionner l'une de fonctions supplémentaires indépendamment de l'état du terminal en réponse à la réception par le moyen de réception d'un premier signal de commande de sélection.

Selon un autre aspect de l'invention, ladite au moins une fonction supplémentaire comprend une fonction de téléphone mains libres, et le modem comprend un moyen pour demander l'établissement d'une communication téléphonique avec un terminal destinataire à travers le réseau de télécommunication indépendamment de l'état du terminal associé au modem en réponse à la réception par le moyen de réception d'un numéro téléphonique désignant le terminal destinataire. Un microphone et un haut-parleur permettent à un utilisateur du modem de communiquer vocalement avec un utilisateur du terminal destinataire directement à partir du modem une fois la communication téléphonique établie.

Le modem peut en outre comprendre des moyens pour respectivement prendre/libérer une ligne instantanément, indépendamment de l'état du terminal, en réponse à la réception par le moyen de réception d'un signal de commande de prise/libération de ligne.

Lorsque ladite au moins une fonction supplémentaire comprend une fonction de répondeur-enregistreur, le modem peut comprendre un moyen pour recevoir des messages vocaux du réseau de télécommunication indépendamment de l'état du terminal, un moyen de mémorisation pour mémoriser lesdits messages vocaux, un moyen pour sélectionner l'un des messages vocaux mémorisés en fonction d'un second signal de commande de sélection reçu par le moyen de réception, et un moyen pour transmettre le message vocal sélectionné au haut-parleur en réponse à la réception par le moyen de réception d'un signal de commande de lecture. Egalement, un moyen peut être prévu pour effacer l'un au moins des messages vocaux dans le moyen de mémorisation en réponse à la réception par le moyen de réception d'un signal de commande d'effacement.

Selon un autre aspect de l'invention, le modem comprend, pour mettre en oeuvre la fonction répondeur, un moyen d'enregistrement, activé suite à la réception par le moyen de réception d'un message de commande d'enregistrement, pour enregistrer un message vocal d'accueil reçu à travers le microphone, un moyen pour émettre le message d'accueil vers le réseau de télécommunication indépendamment de l'état du terminal en réponse à un appel reçu du réseau de télécommunication par le modem, et un moyen pour transmettre le message d'accueil au haut-parleur du modem en réponse à la réception par le moyen de réception d'un autre signal de commande de lecture.

Pour mettre en oeuvre la fonction de télécopieur, le modem comprend un moyen pour recevoir au moins une télécopie du réseau de télécommunication indépendamment de l'état du terminal, un moyen pour comprimer ladite au moins une télécopie reçue, et un moyen pour mémoriser ladite au moins une télécopie comprimée.

Afin de réserver la possibilité d'appeler un terminal à travers le réseau depuis le modem à certaines personnes uniquement, des moyens sont prévus pour respectivement vérifier un code d'accès reçu par le moyen de réception, et autoriser un appel à travers le réseau de télécommunication à partir du modem seulement si le code d'accès est correct.

De préférence, la liaison sans fil est une liaison infrarouge et le moyen de réception est un récepteur infrarouge.

L'invention concerne également un système de commande de modem comprenant un modem tel que décrit ci-dessus et une télécommande pour commander le modem.

D'autres caractéristiques et avantages de l'invention ressortiront de la description suivante de plusieurs modes particuliers de réalisation, donnés à titre d'exemple seulement en référence aux dessins annexés, sur lesquels :
- la figure 1 est un bloc-diagramme d'un modem conforme à l'invention ; et
- la figure 2 est un schéma d'une télécommande utilisée pour commander le modem de la figure 1.

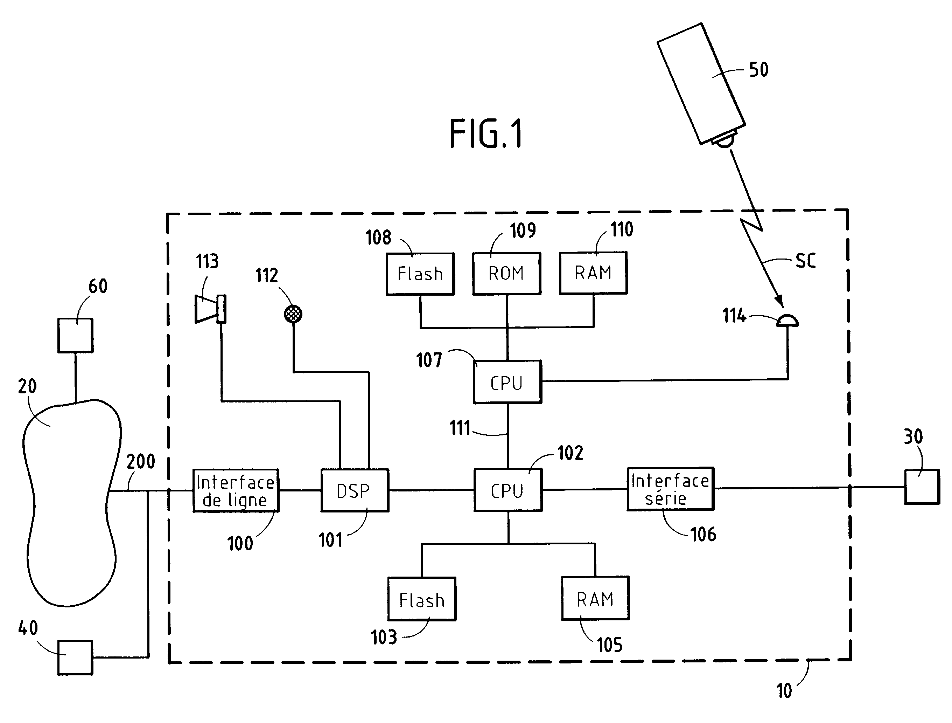

En référence à la figure 1, le modem 10 conforme à la présente invention est branché sur une ligne téléphonique 200 du réseau téléphonique commuté public 20, et relié à un terminal informatique 30 du type ordinateur, tel qu'un micro-ordinateur (Personal Computer). Un terminal téléphonique 40 peut être également branché sur la ligne téléphonique 200 en parallèle avec le modem 10.

Le modem 10 comprend une interface de ligne 100 pour adapter le modem à la ligne téléphonique 200, un processeur de traitement de signal 101, de type DSP (Digital Signal Processor), assurant les fonctions classiques de modulation et démodulation du modem 10, un premier microprocesseur 102, associé à une mémoire non volatile Flash 103 et une mémoire vive RAM (Random Access Memory) 105, pour notamment commander le processeur de traitement de signal 101, et une interface série 106, par exemple de type RS232, pour connecter le terminal 30 au modem 10. Le premier microprocesseur 102 gère l'émission de données produites par le terminal 30 vers le réseau téléphonique 20, ainsi que la réception de données issues du réseau téléphonique 20 et destinées au terminal 30. La mémoire Flash 103 contient des programmes de gestion d'émission/réception de données pour le microprocesseur 102. La mémoire RAM 105 sert essentiellement à mémoriser des données pendant l'exécution des programmes de gestion.

Le modem 10 comprend également un second microprocesseur 107, associé à une mémoire non volatile Flash 108, une mémoire ROM 109 et une mémoire RAM 110. Le second microprocesseur 107 est capable de dialoguer avec le premier microprocesseur 102 à travers une liaison 111. Le second microprocesseur 107 gère des fonctions de télécommunication supplémentaires, ou options, du modem 10, c'est-à-dire des fonctions autres que la modulation/démodulation de données conventionnelle. Ces fonctions supplémentaires sont typiquement des fonctions de téléphone mains libres, répondeur-enregistreur et télécopieur.

Plusieurs modes de fonctionnement autonomes du modem 10, correspondant respectivement aux fonctions supplémentaires précitées, peuvent être alternativement sélectionnés par un utilisateur du modem.

Selon le mode de fonctionnement « téléphone mains libres », l'utilisateur peut établir ou recevoir des communications téléphoniques à travers le réseau téléphonique 20 par l'intermédiaire du modem 10 seulement, quel que soit l'état du terminal 30, c'est-à-dire même si le terminal 30 est éteint ou non connecté au modem 10. Le modem 10 sert alors de terminal téléphonique à la place du terminal téléphonique 40, et comprend à cet effet un microphone 112 et un haut-parleur 113 reliés au processeur DSP 101.

Selon le mode de fonctionnement « répondeur-enregistreur », le modem 10 décroche automatiquement pour prendre la ligne après réception d'un nombre prédéterminé d'impulsions de sonnerie transmises par le réseau 20, c'est-à-dire après ledit nombre prédéterminé de sonneries dans le terminal téléphonique 40, lorsqu'un appel issu d'un terminal appelant (téléphonique ou informatique) est reçu du réseau 20. Le modem 10 reconnaît alors que l'appel est un appel téléphonique et émet un message vocal d'accueil préalablement mémorisé dans la mémoire Flash 108 vers le terminal appelant. Si le terminal appelant transmet ensuite un message vocal au modem 10, le message vocal est mémorisé dans la mémoire Flash 108 du modem, indépendamment de l'état du terminal 30. Plus précisément, le message vocal issu du terminal appelant est numérisé et comprimé par le processeur 101, puis transmis par le premier microprocesseur 102 au second microprocesseur 107 pour être stocké dans la mémoire Flash 108.

Selon le mode de fonctionnement « télécopieur », le modem 10 décroche automatiquement après réception dudit nombre prédéterminé d'impulsions de sonnerie lorsqu'un appel est reçu du réseau 20, reconnaît que l'appel concerne la transmission d'une télécopie, et mémorise la télécopie dans la mémoire Flash 108 indépendamment de l'état du terminal. En pratique, les données représentatives de la télécopie reçue par le modem 10 sont d'abord démodulées par le processeur 101, puis fournies par le premier microprocesseur 102 au second microprocesseur 107. Conformément à l'invention, le second microprocesseur 107 comprime ces données selon une méthode de compression basée sur une technique dite de « Lempel et Ziv », et stocke les données comprimées dans la mémoire 108.

Les données comprimées représentatives de messages vocaux ou de télécopies stockées dans la mémoire Flash 108 peuvent être récupérées par le terminal 30. Si le terminal 30 est éteint lors de la mémorisation des données comprimées dans la mémoire Flash 108, lesdites données sont récupérées par le terminal 30 automatiquement dès sa mise en marche ou sur requête du terminal après sa mise en marche. Avant d'être transmises au terminal 30, les données représentatives de télécopies sont toutefois décomprimées par le second microprocesseur 107.

Les programmes nécessaires au traitement des données représentatives de messages vocaux et de télécopies sont stockées dans la mémoire ROM 109 pour être exécutés par le second microprocesseur 107. La mémoire RAM 110 sert à mémoriser temporairement ces données au cours de leur traitement par le second microprocesseur 107.

Conformément à l'invention, les options décrites ci-dessus peuvent être activées et commandées par l'utilisateur directement à l'aide d'une télécommande infrarouge 50, indépendamment de l'état du terminal 30, c'est-à-dire même si le terminal 30 est éteint ou n'est pas connecté au modem 10. A cet effet, le modem 10 comprend un récepteur infrarouge 114 relié au second microprocesseur 107. Le récepteur infrarouge 114 reçoit des signaux de commande numériques codés SC de la télécommande infrarouge 50 par une liaison sans fil infrarouge. Le second microprocesseur 107 décode les signaux de commande numériques SC, et commande les options décrites ci-dessus en fonction des signaux de commande ainsi décodés grâce à des programmes appropriés également mémorisés dans la mémoire ROM 109.

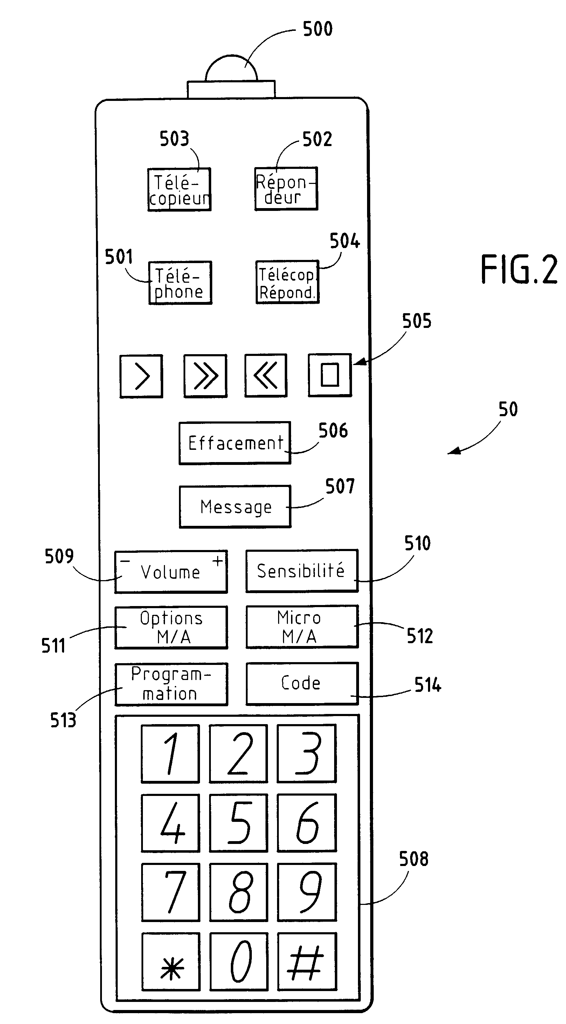

La figure 2 montre plus en détail la télécommande infrarouge 50. Celle-ci comprend un émetteur infrarouge 500, des touches 501 à 504 de sélection des options téléphone mains libres, répondeur-enregistreur et télécopieur, des touches 505 à 507 de commande de l'option répondeur-enregistreur, un clavier numérique 508, et une unité de codage (non représentée) pour générer les signaux numériques codés SC en réponse à l'actionnement de touches de la télécommande.

Une sollicitation de la touche 501 sur la télécommande 50 entraîne l'activation de la fonction de téléphone mains libres du modem 10. Suite à l'actionnement de la touche 501, l'utilisateur peut composer un numéro téléphonique sur le clavier numérique 508. Les chiffres du numéro téléphonique sont successivement émis vers le récepteur infrarouge 114 du modem 10 sous forme de signaux numériques codés SC, et transmis au processeur DSP 101 via le second microprocesseur 107 et le premier microprocesseur 102. Le processeur DSP 101 transcode les chiffres du numéro téléphonique en des codes à fréquences vocales DTMF (Dual Tone Multifrequency), puis transmet les codes DTMF correspondants au réseau téléphonique 20 pour appeler un terminal destinataire désigné par ce numéro téléphonique. L'utilisateur peut éventuellement valider le numéro téléphonique en appuyant par exemple de nouveau sur la touche 501. Une fois la communication établie, l'utilisateur du modem 10 peut communiquer vocalement avec un utilisateur du terminal destinataire, par l'intermédiaire du microphone 112 et du haut-parleur 113, quel que soit l'état du terminal 30, puis, lorsque la communication est terminée, libérer la ligne en appuyant de nouveau sur la touche de téléphone mains libres 501.

La touche 501 peut également être actionnée par l'utilisateur du modem 10 au moment de la réception d'un appel téléphonique, lorsque la sonnerie du terminal téléphonique 40 est activée ou après décrochage du terminal téléphonique 40 suite à l'activation de cette sonnerie. Le modem 10 prend alors la ligne, et l'utilisateur peut se servir du modem 10 comme d'un terminal téléphonique « mains libres ». Cette fonction est particulièrement utile si le terminal téléphonique 40 ne dispose pas d'une fonction « mains libres », c'est-à-dire si le combiné du terminal 40 doit obligatoirement être utilisé pour téléphoner à partir de celui-ci. Lorsque la communication téléphonique est terminée, l'utilisateur peut libérer la ligne en appuyant de nouveau sur la touche 501.

Une sollicitation de la touche 502 sur la télécommande 50 commande l'activation de la fonction de répondeur-enregistreur du modem 10, pour que le répondeur-enregistreur se déclenche automatiquement lors d'un appel après réception dudit nombre prédéterminé d'impulsions de sonnerie transmises par le réseau 20. En outre, grâce aux touches 505 de lecture, de défilement avant et arrière et d'arrêt, l'utilisateur peut sélectionner et écouter, par l'intermédiaire du haut-parleur 113, des messages vocaux stockés dans la mémoire 108 du modem 10. Avant d'être transmis au haut-parleur 113, les messages vocaux sont toutefois décomprimés par le processeur DSP 101. Lorsqu'un message vocal est en cours de lecture, l'utilisateur peut revenir au début du message en appuyant de nouveau sur la touche de lecture parmi les touches 505. Les touches 506 et 507 permettent respectivement l'effacement dans la mémoire 108 de messages vocaux, et l'enregistrement par l'utilisateur, via le microphone 112, du message d'accueil précité.

Une sollicitation de la touche 503 par l'utilisateur commande l'activation de la fonction de télécopieur du modem 10, afin que le modem 10 puisse réceptionner et mémoriser des télécopies de manière autonome, c'est-à-dire même si le terminal 30 est éteint, comme il a été décrit précédemment.

Egalement, si la touche 503 est actionnée par l'utilisateur au moment de la réception d'un appel, lorsque la sonnerie du terminal téléphonique 40 est activée par l'envoi d'impulsions de sonnerie depuis le réseau 20 ou après décrochage du terminal téléphonique 40 suite à l'activation de cette sonnerie, le modem 10 prend instantanément la ligne en vue de réceptionner une télécopie. En particulier, cette prise de ligne manuelle peut être avantageusement effectuée par l'utilisateur lorsque, après avoir décroché le terminal téléphonique 40 suite à l'activation de la sonnerie de celui-ci, l'utilisateur reconnaît la tonalité spécifique aux télécopies. En effet, dans les modems actuels, si l'utilisateur décroche son terminal téléphonique avant que la fonction de télécopieur du modem soit activée alors que l'appel concerne une transmission de télécopie, la télécopie est perdue et ne peut pas être transmise au modem.

La touche 504 permet d'activer à la fois la fonction de répondeur-enregistreur et la fonction de télécopieur. Lorsque cette touche a été actionnée, le modem 10 décroche automatiquement après ledit nombre prédéterminé de sonneries dans le terminal téléphonique 40 lorsqu'un appel est reçu du réseau 20, et envoie le message d'accueil vers le terminal appelant. Si l'appel est un appel téléphonique, le modem 10 reçoit et mémorise un éventuel message vocal émis par le terminal appelant. Si l'appel concerne la transmission d'une télécopie, le modem 10 se met automatiquement en mode télécopieur pour recevoir et mémoriser la télécopie.

La télécommande 50 comprend en outre des touches de réglage 509, 510 pour commander respectivement le réglage de la sensibilité du microphone 112 et du niveau sonore du haut-parleur 113 du modem 10.

D'autres touches 511, 512 permettent respectivement de désactiver les fonctions supplémentaires du modem, et d'activer/désactiver le microphone 112.

Selon une variante de l'invention, pour émettre un appel vers le réseau 20 à partir du modem 10, un code d'accès doit obligatoirement être fourni au modem par l'intermédiaire de la télécommande 50. Le code d'accès est préalablement programmé par l'utilisateur en appuyant sur une touche 513, en composant le code sur le clavier numérique 508, et en validant ce code en appuyant par exemple de nouveau sur la touche 513. Le second microprocesseur 107 du modem 10 mémorise le code d'accès dans une mémoire non volatile, telle que la mémoire Flash 108 ou une mémoire EEPROM (Electrical Erasable Programmable Read Only Memory). Pour pouvoir ensuite appeler un terminal destinataire à partir du modem 10, par exemple en utilisant la fonction de téléphone mains libres ou en demandant une connexion sur le réseau Internet via le terminal 30, l'utilisateur actionne une première fois une touche 514, compose le code d'accès sur le clavier numérique, puis actionne une seconde fois la touche 514. Le second microprocesseur 107 du modem 10 vérifie le code d'accès. Le microprocesseur 107 autorise un appel du terminal destinataire depuis le modem seulement si le code d'accès est correct.

## Revendications

1. Modem (10) destiné à être relié à un réseau de télécommunication (20) et à être associé à un terminal (30), comprenant un moyen de modulation/démodulation (100-106) pour permettre au terminal de communiquer sur le réseau de télécommunication, et un moyen (100-110) pour assurer au moins une fonction supplémentaire telle qu'une fonction de téléphone mains libres, répondeur-enregistreur ou télécopieur, caractérisé en ce qu'il comprend :
- un moyen de réception (114) pour recevoir par une liaison sans fil et indépendamment de l'état du terminal (30) des signaux de commande (SC) destinés à commander ladite au moins une fonction supplémentaire, et
- un moyen de commande (107) pour commander ladite au moins une fonction supplémentaire en fonction des signaux de commande reçus.

2. Modem conforme à la revendication 1, caractérisé en ce que ladite au moins une fonction supplémentaire comprend plusieurs fonctions supplémentaires, et en ce que le moyen de commande comprend un moyen (107) pour sélectionner l'une des fonctions supplémentaires indépendamment de l'état du terminal (30) en réponse à la réception par le moyen de réception (114) d'un premier signal de commande de sélection (SC, 501-504).

3. Modem conforme à la revendication 1 ou 2, caractérisé en ce que ladite au moins une fonction supplémentaire comprend une fonction de téléphone mains libres, et en ce qu'il comprend un moyen (107) pour demander l'établissement d'une communication téléphonique avec un terminal destinataire (60) à travers le réseau de télécommunication (20) indépendamment de l'état du terminal (30) associé au modem en réponse à la réception par le moyen de réception (114) d'un numéro téléphonique (SC, 508) désignant ledit terminal destinataire (60).

4. Modem conforme à la revendication 3, caractérisé en ce qu'il comprend un microphone (112) et un haut-parleur (113) pour en particulier permettre à un utilisateur du modem (10) de communiquer vocalement avec un utilisateur du terminal destinataire (60) directement à partir du modem (10) une fois la communication téléphonique établie.

5. Modem conforme à la revendication 3 ou 4, caractérisé en ce qu'il comprend un moyen (107) pour libérer une ligne instantanément indépendamment de l'état du terminal (30) en réponse à la réception par le moyen de réception (114) d'un signal de commande de libération de ligne (SC).

6. Modem conforme à l'une quelconque des revendications 1 à 5, caractérisé en ce que ladite au moins une fonction supplémentaire comprend une fonction de téléphone mains libres ou de télécopieur, et en ce qu'il comprend un moyen (107) pour prendre une ligne instantanément, indépendamment de l'état du terminal (30), en réponse à la réception par le moyen de réception (114) d'un signal de commande de prise de ligne (SC, 503 ; 501).

7. Modem conforme à l'une quelconque des revendications 1 à 6, caractérisé en ce que ladite au moins une fonction supplémentaire comprend une fonction de répondeur-enregistreur, et en ce qu'il comprend un haut-parleur (113), un moyen (100, 101) pour recevoir des messages vocaux du réseau de télécommunication (20) indépendamment de l'état du terminal (30), un moyen de mémorisation (108) pour mémoriser lesdits messages vocaux, un moyen (107) pour sélectionner l'un des messages vocaux mémorisés en fonction d'un second signal de commande de sélection (SC, 505) reçu par le moyen de réception (114), et un moyen (107) pour transmettre le message vocal sélectionné au haut-parleur en réponse à la réception par le moyen de réception d'un signal de commande de lecture (SC, 505).

8. Modem conforme à la revendication 7, caractérisé en ce qu'il comprend un moyen (107) pour effacer l'un au moins des messages vocaux dans le moyen de mémorisation (108) en réponse à la réception par le moyen de réception d'un signal de commande d'effacement (SC, 506).

9. Modem conforme à l'une quelconque des revendications 1 à 8, caractérisé en ce que ladite au moins une fonction comprend une fonction de répondeur, et en ce qu'il comprend un microphone (112), un moyen d'enregistrement (107, 108), activé suite à la réception par le moyen de réception (114) d'un message de commande d'enregistrement (SC, 507), pour enregistrer un message vocal d'accueil reçu à travers le microphone (112), et un moyen (107, 102, 101, 100) pour émettre le message d'accueil vers le réseau de télécommunication (20) indépendamment de l'état du terminal (30) en réponse à un appel reçu du réseau de télécommunication (20) par le modem (10).

10. Modem conforme à l'une quelconque des revendications 1 à 9, caractérisé en ce que ladite au moins une fonction comprend une fonction de télécopieur, et en ce qu'il comprend un moyen (100, 101) pour recevoir au moins une télécopie du réseau de télécommunication (20) indépendamment de l'état du terminal (30), un moyen (107) pour comprimer ladite au moins une télécopie reçue, et un moyen (107, 108) pour mémoriser ladite au moins une télécopie comprimée.

11. Modem conforme à l'une quelconque des revendications 1 à 10, caractérisé en ce qu'il comprend un moyen (107, 108) pour vérifier un code d'accès (SC, 508) reçu par le moyen de réception (114), et un moyen (107) pour autoriser un appel à travers le réseau de télécommunication (20) à partir du modem (10) seulement si le code d'accès est correct.

12. Modem conforme à l'une quelconque des revendications 1 à 11, caractérisé en ce que ladite liaison sans fil est une liaison infrarouge et le moyen de réception (114) est un récepteur infrarouge.

13. Modem conforme à l'une quelconque des revendications 1 à 12, caractérisé en ce que les signaux de commande (SC) sont générés par une télécommande (50).

14. Système de commande de modem comprenant un modem (10) conforme à l'une quelconque des revendications 1 à 13 et une télécommande (50) pour commander le modem.
